(19) Europäisches Patentamt
European Patent Office
Office européen des brevets

(11) Publication number: **0 102 003**
**B1**

(12) **EUROPEAN PATENT SPECIFICATION**

(45) Date of publication of patent specification: **10.12.86**

(51) Int. Cl.$^4$: **A 01 N 25/22,** A 01 N 47/22

(21) Application number: **83107914.0**

(22) Date of filing: **10.08.83**

# (54) Stabilised herbicide composition based on meta-biscarbamates.

(30) Priority: **13.08.82 IT 2283782**
**13.07.83 IT 2204183**

(43) Date of publication of application:
**07.03.84 Bulletin 84/10**

(45) Publication of the grant of the patent:
**10.12.86 Bulletin 86/50**

(84) Designated Contracting States:
**AT BE CH DE FR GB LI LU NL SE**

(56) References cited:
**BE-A- 892 864**
**FR-A-2 468 306**
**US-A-3 898 075**

(73) Proprietor: **S.I.P.C.A.M. S.p.A. Società Italiana Prodotti Chimici e per l'Agricoltura Milano**
**Viale Gian Galeazzo, 3**
**I-20136 Milano (IT)**

(72) Inventor: **Ciocca, Baldo**
**Via De Amicis, 33**
**I-20123 Milano (IT)**
Inventor: **Formigoni, Attilio**
**Via Pietro Micca, 1**
**Legnano (Milano) (IT)**
Inventor: **Epis, Gino**
**Viale Rimembranze, 37**
**Lodi (Milano) (IT)**

(74) Representative: **Vatti, Paolo, Dr. Ing. et al**
**Fumero - Studio Consulenza Brevetti**
**Widenmayerstrasse 4/I**
**D-8000 München 22 (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 102 003 B1

**Description**

This invention relates to a stabilised herbicide composition based on a meta-biscarbamate.

It is known that herbicide composition containing a compound of formula:

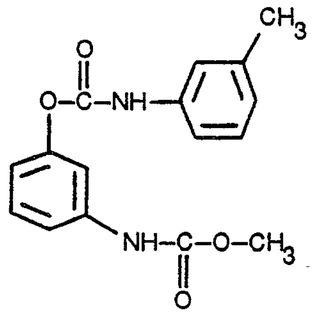

(A)

possess excellent herbicide action on sugar beet and other crops, if formulated with suitable adjuvants and inerts.

However, it is also known that the aforesaid compound possess limited stability with time if prepared in common emulsifiable liquid herbicide compositions based on organic solvents, and which contain adjuvants and inerts having no stabilising effect.

U.S. Patent No. 3,898,075 describes the possibility of stabilising the compounds of formula (A) in emulsifiable liquid herbicide compositions based on organic solvents, by adding a stablising compound chosen from dicarboxylic aliphatic acids, hydrocarboxylic aliphatic acids, nitro-substituted monocarboxylic aromatic acids, dicarboxylic aromatic acids, sulphonated aliphatic acids, and sulphonated aromatic acids.

In addition to claiming these stabilisers, the aforesaid U.S. patent describes the already known addition of common adjuvants and inerts commonly used by the expert in this field for preparing emulsifiable liquid composition suitable for use as plant protection products.

Specifically, stated suitable inerts are solvents based on aromatic hydrocarbons, cyclohexanone, isophorone, methylhexahydronaphthalene, dibutylphthalate, tetrahydronaphthalene, dimethylsulphoxide and dimethylformamide, and stated suitable surfactants are polyethoxylated amines, alcohols, acids and alkylphenols, and salts of alkybenzene and naphthalenesulphonic acids.

With the present invention, it has been unexpectedly found that the compound of formula:

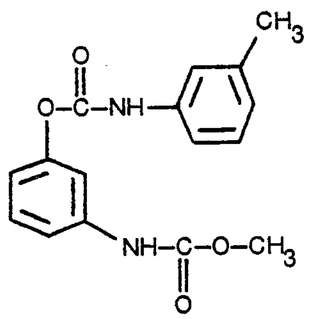

(A)

can be formulated as organic solvent-based emulsifiable liquid and that such formulations may be stabilised with polyethoxylated tristyryl- and distyrylphenol phosphates (available commercially for example under the names SOPROPHOR or SOPRAL 3D 33 of SOPROSOIE Co. Rochetaillee, France or under the name SOITEM 8 FL of SOITEM Co., Milan, Italy).

With respect to the known art, the interest of the present invention is even greater when considering that the substances among those cited hereabove, able to exhibit a stabilising effect, also possess the property of acting as surfactants, i.e. as emulsifying or suspending agents, in herbicide formulations of emulsifiable liquid, based on compounds of formula (A), with obvious saving in adjuvants and greater composition economy.

Moreover, the stabilisers according to the invention exhibit their action in relatively small doses, for the most part economical.

In this respect, said stablisers can be added to the composition according to the invention in a percentage varying from 0.5% to a theoretical maximum of 50% by weight, according to the type of formulation and the concentration of the compound of formula (A).

In addition to the stabilisers, with possible surfactant effect according to the invention, other surfactants, suspending agents or emulsifying agents can be added to formulations comprising the compound of formula (A), as necessary for optimising the hydrophilic/lipophilic balance of the composition in accordance with the methods well known to the expert in this field (for example calcium

alkylarylsulphonate, polyethoxylated fatty acids or polyethoxylated alkylarylphenols described in the publication Mc Cutcheon's — Detergent & Emulsifiers — 1982 Annual — International Edition, Glen Rock (N.J.) U.S.A.

Other active antiparasite or adjuvant substances can also be added to the formulations according to the invention, in particular other herbicides, such as chloridazon, metamitron, ethofumesate, lenacil, cycloate, diallate, triallate, butachlor, metolachlor and trimexachlor.

For organic solvent-based liquid formulations, which are emulsifiable in water, the following composition can be used by way of example:

5—50% (preferably 10—35%) of active substance of formula (A)

preferably 1.5—20% of stabilisers, which may also possess emulsyfying action, possibly together with further surfactants (emulsifiers) not possessing stabilising action.

Remainder to 100% solvents.

The solvents used can be isophorone, cyclohexanone, aromatic hydrocarbons, dimethylsulphoxid, dimethylformamide, N-methylpyrrolidone.

Water based fluid emulsions can also be prepared by emulsifying in water the active principle dissolved in a suitable solvent, with addition of suitable emulsifying and suspending agents as well as stabilisers selected among those indicated by the present invention.

The composition according to the invention is particularly suitable for use in the selective de-weeding of agricultural or horticultural crops (such as sugar beet, fodder beet, beetroot, spinach, strawberries) mainly in treatment after emergence, by spraying dilute aqueous emulsions or suspensions containing from 0.15 to 3 Kg/Ha of active substance.

The following examples are useful for better illustrating the invention, but do not limit its possible applications.

Example 1

The following substances are fed into a vessel fitted with a liquid stirrer, and are kept constantly mixed:

| | |
|---|---|
| 3-methoxycarbonyl-aminophenyl-N-(3-methylphenyl) carbamate of 97% purity | 17.2 Kg. |
| trystyrylphenolphosphate polyethoxylated with 17 moles of ethylene oxide (E.O.) (1) | 8.0 Kg. |
| Calcium dodecylbenzenesulphonate | 2.0 Kg. |
| Isophorone | 72.8 Kg. |
| TOTAL | 100 Kg. |

(1) — Produced as SOITEM 8 FL by SOITEM CO., Milan, Italy.

A liquid, water emulsifiable stabilised formulation is thereby obtained, to be used as herbicide.

Example 2

The chemical stability of the active substance is observed at various temperature levels (20°C. and 54°C) for various lengths of time (1 month and 3 months) in the case of organic solvent-based emulsifiable liquid formulation according to the invention, comprising a stabilizer as indicated in Example 1, compared with an emulsifiable liquid formulation without stabilisers and having the following composition:

| | |
|---|---|
| 3-methoxy-carbonyl-aminophenyl-N-(3-methylphenyl) carbamate of 97% purity | 17.2 Kg. |
| SOITEM 101 (80% octylphenol polyethoxylated with 20 moles of E.O.1+20% calcium dodecylbenzenesulfonate) | 1.0 Kg. |
| SOITEM 990 (25% octylphenol polyethoxylated with 20 moles of E.O.+75% calcium dodecylbenzenesulfonate | 7.0 Kg. |
| Isophorone | 74.8 Kg. |
| TOTAL | 100 Kg. |

The results are shown in Table 1, from which it can be seen that the addition of the stabiliser according to the invention prevents rapid decomposition of the active substances, even if the emulsifiable liquid formulation is kept at elevated temperature for a long period.

TABLE 1

Stability of the active substance 3-methoxycarbonyl-aminophenyl-N-(3-methylphenyl)carbamate in emulsifiable liquid composition, with and without stabilisers according to the invention.

| | T | % decomposition of active substance after 1 month | 3 month |
|---|---|---|---|
| Composition with stabiliser | 20°C | 0 | 0 |
| Formula of Example 1 | 54°C. | 0 | 2 |
| Composition without stabiliser | 20°C | 3 | 10 |
| Formula of Example 2 | 54°C | 30 | 60 |

**Claims**

1. A stabilised herbicide composition formulated as an organic emulsifiable liquid or emulsion containing the compound of formula

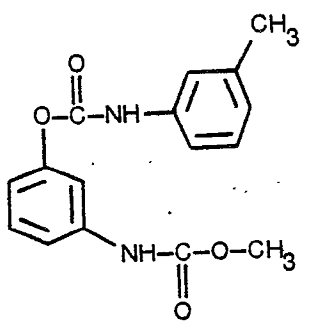

.(A)

together with one or more stabilisers based on polyethoxylated tristyryl- and distyrylphenol-phosphates, together with other adjuvants and liquid inerts.

2. Composition as claimed in claim 1 wherein the stabilisers concentration is between 0.5% and 50% by weight.

3. A method of application of a composition as claimed in claims 1 and 2 for the selective de-weeding of agricultural and horticultural crops in treatments after emergence, wherein between 0.15 kg/ha and 3 kg/ha of active substance of formula (A) are distributed.

**Patentansprüche**

1. Stabilisierte herbizide Zusammensetzung, zubereitet als eine organische emulgierbare Flüssigkeit oder Emulsion, die die Verbindung der Formel

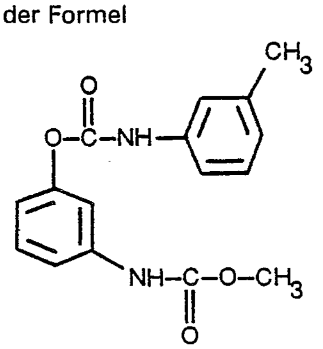

(A)

enthält, zusammen mit einem oder mehreren Stabilisatoren, gegründet auf polyethoxylierten Tristyryl- und Distyrylphenolphosphaten, zusammen mit anderen Hilfsstoffen und flüssigen inerten Stoffen.

2. Verbindung, wie in Anspruch 1 beansprucht, wobei die Konzentration der Stabilisatoren zwischen 0,5 und 50 Gewichtsprozenten liegt.

3. Verfahren zur Anwendung einer Zusammensetzung, wie in den Ansprüchen 1 und 2 beansprucht, zur selektiven Unkrautbekämpfung bei landwirtschaftlichen und gartenbaulichen Feldfrüchten in Behandlungen nach dem Hervorkommen, wobei zwischen 0,15 kg/ha und 3 kg/ha aktiver Substanz der Formel (A) verteilt werden.

**Revendications**

1. Composition herbicide stabilisée, formulée sous forme d'un liquide organique émulsionnable ou d'une émulsion contenant le composé de formule:

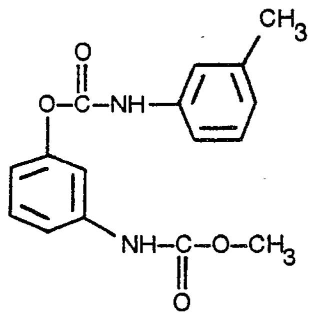

(A)

ainsi qu'un ou plusieurs stabilisants à base de phosphates de tristyryl- et distyryl-phénol polyéthoxylé, ainsi que d'autres adjuvants et substances liquides inertes.

2. Composition telle que revendiquée dans la revendication 1 dans laquelle la concentration des stabilisants est comprise entre 0,5% et 50% en poids.

3. Procédé d'application d'une composition telle que revendiquée dans les revendications 1 et 2 pour le désherbage sélectif de plantes d'agriculture et d'horticulture, en traitement après émergence, suivant lequel sont répartis entre 0,15 kg/ha et 3 kg/ha de substance active de formule (A).